# EUROPEAN PATENT APPLICATION

(11) **EP 4 439 275 A1**
(43) Date of publication of application: **02.10.2024**
(21) Application number: 24158550.4
(22) Date of filing: 20.02.2024
(51) Int. Cl.: G06F 8/35, G06F 9/44, G06N 20/00

(54) **GENERATING ML PIPELINES USING EXPLORATORY AND GENERATIVE CODE GENERATION TOOLS**

(30) Priority: 31.03.2023 US 202318194478
(71) Applicant: Fujitsu Limited, Kawasaki-shi, Kanagawa 211-8588 (JP)
(72) Inventor: Chen, Wei-Peng, Fremont, California (US); Liu, Lei, San Jose, California (US); Bahrami, Mehdi, San Jose, California (US)
(74) Representative: Hoffmann Eitle

(57) **Abstract**

Operations include receiving an input dataset associated with a machine learning (ML) task and generating a first ML pipeline associated with the ML task by executing a code generation tool. The operations further include executing one or more exploratory code generation tools and selecting a pipeline component from the set of pipeline components. Also included are modification of the first ML pipeline based on the selection to generate a second ML pipeline and determination of a first performance metric by executing the first ML pipeline on the input dataset. The operations further include determining a second performance metric by executing the second ML pipeline on the input dataset and controlling an electronic device to render an ML pipeline recommendation as one of the first ML pipeline or the second ML pipeline, based on a comparison of the first performance metric with the second performance metric.

## Description

### FIELD

The embodiments discussed in the present disclosure are related to generating machine learning (ML) pipelines using exploratory and generative code generation tools.

### BACKGROUND

Advancements in the field of machine learning and Artificial Intelligent (AI) have led to development of automated code generation tools that are increasingly being used by students, researchers, and engineers alike to solve various types of engineering and scientific problems. An automated machine learning tool is a form of code generation tool that provides processes that can be used to automate tasks of applying machine learning to real-world problems. For example, an automated machine learning tool may facilitate users in different stages of development of machine learning project(s), i.e., from beginning with a raw dataset to building a machine learning model for deployment. A novice user may use an automated machine learning tool to learn machine learning approaches for processing data and training a machine learning model. On the other hand, a data-scientist or an expert user may use the automated machine learning tool to improve accuracy of the machine learning model by applying different approaches and varieties of pipeline utilizations. The automated machine learning tool may typically generate a computer-executable code for a given task and dataset provided by the users of the tool.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations. The set of operations may include receiving data including receiving an input dataset associated with a machine learning (ML) task and generating a first ML pipeline associated with the ML task by executing a generative code generation tool. The set of operations may further include determining a set of pipeline components associated with the ML task by executing one or more exploratory code generation tools and selecting a pipeline component from the set of pipeline components. The set of operations may further include modifying the first ML pipeline based on the selection to generate a second ML pipeline and determining a first performance metric by executing the first ML pipeline on the input dataset The set of operations may further include determining a second performance metric by executing the second ML pipeline on the input dataset and controlling an electronic device to render an ML pipeline recommendation as one of the first ML pipeline or the second ML pipeline, based on a comparison of the first performance metric with the second performance metric.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to generating machine learning (ML) pipelines using exploratory and generative code generation tools;
FIG. 2 is a block diagram that illustrates an exemplary electronic device for generating machine learning (ML) pipelines using exploratory and generative code generation tools;
FIG. 3 is a diagram that illustrates a flowchart of an example method for generating machine learning (ML) pipelines using exploratory and generative code generation tools;
FIGs. 4A and 4B are diagrams that illustrates an exemplary scenario for modifying a first ML pipeline; and
FIG. 5 is a diagram that illustrates an exemplary scenario for generating a machine learning (ML) pipeline using exploratory and generative code generation tools,
all according to at least one embodiment described in the present disclosure.

### DESCRIPTION OF EMBODIMENTS

Some embodiments described in the present disclosure relate to methods and systems for generating machine learning (ML) pipelines using exploratory and generative code generation tools. In the present disclosure, instead of choosing one type of automated machine learning (AutoML) tool, such as an exploratory code generation tool or a generative code generation tool, machine learning (ML) pipelines that are generated by the generative code generation tool may be combined with various models explored by the exploratory code generation tool. Thus, advantages associated with each of the exploratory code generation tool and the generative code generation tool may be retained and customizable ML pipelines with enhanced performance may be synthesized.

According to one or more embodiments of the present disclosure, the technological field of Artificial Intelligence (AI) models may be improved by configuring a computing system in a manner that the computing system may be able to generate machine learning (ML) pipelines using exploratory and generative code generation tools. The computing system may receive an input dataset associated with a machine learning (ML) task. The computing system may generate a first ML pipeline associated with the ML task by executing a generative code generation tool. The computing system may determine a set of pipeline components associated with the ML task by executing one or more exploratory code generation tools. The computing system may select a pipeline component from the set of pipeline components. The computing system may modify the first ML pipeline based on the selection to generate a second ML pipeline. The computing system may determine a first performance metric by executing the first ML pipeline on the input dataset. The computing system may determine a second performance metric by executing the second ML pipeline on the input dataset The computing system may control an electronic device to render an ML pipeline recommendation as one of the first ML pipeline or the second ML pipeline, based on a comparison of the first performance metric with the second performance metric.

An automated machine learning tool is a form of code generation tool that provides processes that can be used to automate tasks of applying machine learning to real-world problems. For example, an automated machine learning tool may facilitate users in different stages of development of machine learning project(s), i.e., from beginning with a raw dataset to building a machine learning model for deployment. The automated machine learning (AutoML) may be thus, a low-code no-code (LCNC) solution to solve a machine learning problem. For a given input dataset, the AutoML may automatically train a ML model and make predictions. The automated machine learning tool may typically generate a computer-executable code for a given task and dataset provided by the users of the tool.

Two main approaches for AutoML tool may be a generative code generation tool and an exploratory code generation tool. The generative code generation tool may generate executable ML pipelines for data scientists within a shorter time duration. Herein, the ML pipelines may be generated based on existing domain specific best practices. The generative code generation tool may require substantial amount of effort for labeling of source codes and advanced engineering works for extracting templates of the ML pipelines from source codes written by data scientists. The exploratory code generation tool may, on the other hand, require large computation resource and longer computation time to search for a best ML pipeline from a search space of ML pipelines. However, different exploratory code generation tools may have their own systematical engineering approaches to explore various options of feature engineering and machine learning algorithms. Therefore, training data may not need to be prepared in order to generate ML pipelines using the exploratory code generation tools. Moreover, for any given dataset, in theory, and for a given sufficient time duration and budget to explore a large search space of ML pipelines, the exploratory code generation tool may be more reliable than the generative code generation tools to find a ML pipeline with reasonable performance. Thus, the generative code generation tool and the exploratory code generation tool may have their own pros and cons.

The disclosed system, on the other hand, may generate machine learning (ML) pipelines using both the exploratory and generative code generation tools. The disclosed system may combine the machine learning pipeline generated by the generative code generation tool with a pipeline component selected from the set of pipeline components that may be determined by executing the one or more exploratory code generation tools. The disclosed system may thus, retain advantages of both the exploratory code generation tool and the generative code generation tool. That is, the disclosed system may recommend the ML pipeline with reasonable performance for the ML task in a shorter time duration. Since, the generative code generation tool is used, the ML pipeline may be recommended by considering the domain specific best practices used by the data scientists. Furthermore, since the one or more exploratory code generation tools are used, the recommended ML pipeline may be reliable and may have a reasonable performance score.

Embodiments of the present disclosure are explained with reference to the accompanying drawings.

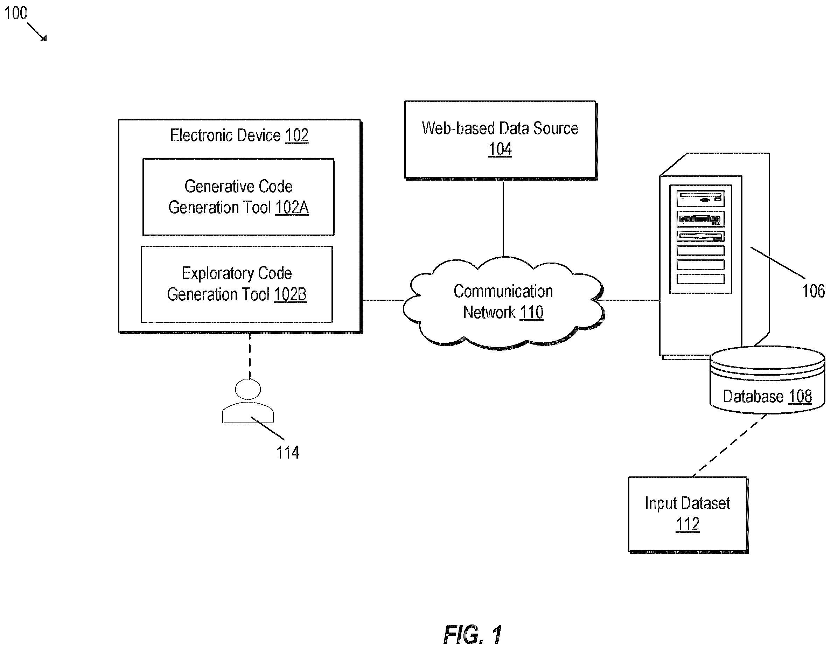

FIG. 1 is a diagram representing an example environment related to synthesizing machine learning (ML) pipelines for automated pipeline recommendations, arranged in accordance with at least one embodiment described in the present disclosure. With reference to FIG. 1, there is shown an environment 100. The environment 100 may include a system. The system may include an electronic device 102, a web-based data source 104, a server 106, a database 108, and a communication network 110. The electronic device 102 may include or may have access to a generative code generation tool 102A and an exploratory code generation tool 102B. The electronic device 102, the web-based data source 104, and the database 108 may be communicatively coupled to each other, via the communication network 110. The database 108 may include an input dataset 112. In FIG. 1, there is further shown a user 114 who may be associated with or operating the electronic device 102.

The system (not shown) may include suitable logic, circuitry, interfaces, and/or code that may be configured to generate machine learning (ML) pipelines using exploratory and generative code generation tools recommendations, as described herein. Examples of the system may include, but are not limited to, a meta-learning machine, a mobile device, a desktop computer, a laptop, a computer workstation, a computing device, a mainframe machine, a server, such as a cloud server, and a group of servers. In one or more embodiments, the system may include a user-end terminal device and a server communicatively coupled to the user-end terminal device. The system may be implemented using hardware including a processor, a microprocessor (e.g., to perform or control performance of one or more operations), a field-programmable gate array (FPGA), or an application-specific integrated circuit (ASIC). In some other instances, the system may be implemented using a combination of hardware and software.

The electronic device 102 may include suitable logic, circuitry, interfaces, and/or code that may be configured to render an ML pipeline recommendation on a display screen to assist the user 114 (e.g., a developer). Examples of the electronic device 102 may include, but are not limited to, a meta-learning machine, a mobile device, a desktop computer, a laptop, a computer workstation, a computing device, a mainframe machine, a server, such as a cloud server, and a group of servers. In one or more embodiments, the electronic device 102 may include a user-end terminal device and a server communicatively coupled to the user-end terminal device.

The generative code generation tool 102A may be used to generate the first ML pipeline associated with the ML task. In an embodiment, the generative code generation tool 102A may be a generative automated machine learning (AutoML) and be trained on human-written pipelines. The generative code generation tool 102A may be configured to generate ML pipelines by considering domain-specific best practices of data scientists or ML engineers. The generative code generation tool 102A may not need to explore and dynamically execute a large number of pipeline candidates to generate the first ML pipeline associated with the ML task. Thus, the generative code generation tool 102A may need to be executed for a shorter execution time in order to generate the first ML pipeline. As the generated first ML pipeline may need to be customized for business purposes, the generated first ML pipeline may need to be executed several times. The shorter execution time and smaller cost associated with the generative code generation tool 102A may thus be helpful for an entire customization procedure of the first ML pipeline. The generative code generation tool 102A may generate the first ML pipeline without dynamically executing a large number of ML pipeline candidates. Example, of the generative code generation tool 102A may include "SapientML", "Alpha D3M^{®}", "Oracle^{®} AutoML", and the like.

The exploratory code generation tool 102B may be used to determine a set of pipeline components associated with the ML task. The exploratory code generation tool 102B may consider automated ML problems as a search and optimization problem where an ML pipeline component having a maximum value of a performance score may be selected from a search space of pipeline components.

For any given dataset, the exploratory code generation tool 102B may be more reliable than other code generation approaches to find an ML pipeline (such as a pipeline with a set of pipeline components) with a reasonable performance, given sufficient time and budget to explore a large search space of ML pipelines. However, the exploratory code generation tool 102B may need to explore and dynamically execute a large number of ML pipeline candidates that may result in a longer processing time and a higher exploration cost. Also, the exploratory code generation tool 102B may be unable to learn from domain specific best practices of data scientists. For example, the exploratory code generation tool 102B may be unable to apply specific feature engineering transforms to specific dataset columns like a human data scientist

The web-based data source 104 may be a platform for hosting web data such as datasets, discussions, code repositories, and/or executable kernels (such as code notebooks). In an embodiment, the web-based data source 104 may be a website server, a cloud storage, a web application, or a web-based service that exposes a web-API for data download. The kernels may include machine learning pipelines for the specific datasets. In some cases, the input dataset 112 may be received from the web-based data source 104 and stored in the database 108. In an embodiment, the input dataset 112 may be received from a proprietary data source which may be different (unlinked) from the web-based data source 104.

The server 106 may include suitable logic, circuitry, and interfaces, and/or code that may be configured to store information associated with the input dataset and the generated first ML pipeline. The server 106 may be implemented as a cloud server and may execute operations through web applications, cloud applications, HTTP requests, repository operations, file transfer, and the like. Other example implementations of the server 106 may include, but are not limited to, a database server, a file server, a web server, a media server, an application server, a mainframe server, or a cloud computing server.

In at least one embodiment, the server 106 may be implemented as a plurality of distributed cloud-based resources by use of several technologies that are well known to those ordinarily skilled in the art. A person with ordinary skill in the art will understand that the scope of the disclosure may not be limited to the implementation of the server 106 and the electronic device 102 as two separate entities. In certain embodiments, the functionalities of the server 106 can be incorporated in its entirety or at least partially in the electronic device 102, without a departure from the scope of the disclosure. In certain embodiments, the server 106 may host the database 108. Alternatively, the server 106 may be separate from the database 108 and may be communicatively coupled to the database 108.

The database 108 may include suitable logic, interfaces, and/or code that may be configured to store the input dataset 112. The database 108 may be derived from data off a relational or non-relational database, or a set of comma-separated values (csv) files in conventional or big-data storage. The database 108 may be stored or cached on a device, such as the server 106 or the electronic device 102. The device storing the database 108 may be configured to receive a query for the input dataset 112 from the electronic device 102. In response, the device storing the database 108 may be configured to retrieve and provide the queried input dataset 112 to the electronic device 102 based on the received query. In some embodiments, the database 108 may be hosted on a plurality of servers at one or more locations. The operations of the database 108 may be executed using hardware including a processor, a microprocessor (e.g., to perform or control performance of one or more operations), a field-programmable gate array (FPGA), or an application-specific integrated circuit (ASIC). In some other instances, the database 108 may be implemented using software.

The communication network 110 may include a communication medium through which the electronic device 102 may communicate with the server 106 which may store the database 108. Examples of the communication network 110 may include, but are not limited to, the Internet, a cloud network, a Wireless Fidelity (Wi-Fi) network, a Personal Area Network (PAN), a Local Area Network (LAN), and/or a Metropolitan Area Network (MAN). Various devices in the environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

The input dataset 112 may be data that may be received from the user 114 or the web-based data source 104 for which an ML pipeline recommendation may need to be made. In an embodiment, the input dataset 112 may be a tabular dataset such as a dataset associated with a house price prediction problem. The received input dataset 112 may be in raw form and may be stored in format such as csv, tsv, txt, or json in the database 108.

In operation, a user input may be provided via the electronic device 102, For example, the electronic device 102 may enable the user 114 to submit a request that includes a dataset (such as the input dataset 112) to the system to generate an ML pipeline recommendation for the dataset in the form of a computer-executable code or a kernel (such as a computer-executable notebook).

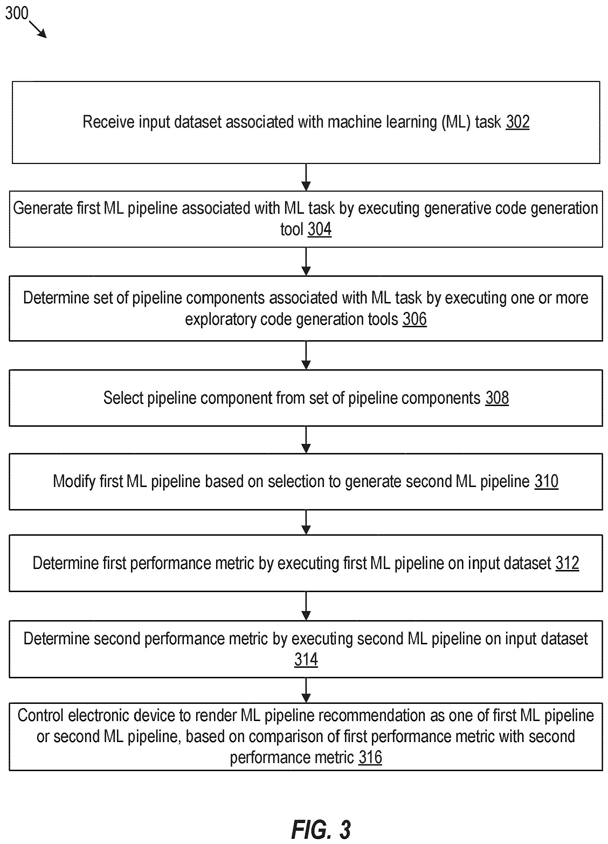

The system may receive the input dataset 112 associated with an ML task via the request and may generate a first ML pipeline associated with the ML task by executing the generative code generation tool 102A. The generative code generation tool 102A may be also referred to as a generative AutoML tool that may generate a ML pipeline for a prediction task for a new dataset by learning from a corpus of old datasets and human-written ML pipelines. As an example, the generative code generation tool 102A may be "SapientML". Details related to generation of the first ML pipeline are further provided, for example, in FIG. 3 (at 304).

The system may determine the set of pipeline components associated with the ML task by executing one or more exploratory code generation tools such as, the exploratory code generation tool 102B. Each of the one or more exploratory code generation tools may require a different configuration. During the execution of the exploratory code generation tool 102B, a specification may be provided as an input to the exploratory code generation tool 102B. In order to determine the set of pipeline components, the system may execute the exploratory code generation tool 102B based on the received specification. Details related to the determination of the set of pipeline components are further provided, for example, in FIG. 3 (at 306).

The system may select a pipeline component from the set of pipeline components. In order to select the pipeline component, performance data associated with the set of pipeline components may be determined. Thereafter, the pipeline component may be selected based on the performance data. Details related to the selection of the pipeline component are further provided, for example, in FIG. 3 (at 308).

The system may modify the first ML pipeline based on the selection to generate the second ML pipeline. In order to generate the second ML pipeline, the system may replace the selected pipeline component from the set of pipeline components with a pipeline component of the first ML pipeline. Details related to modification of the first ML pipeline are further provided, for example, in FIG. 3 (at 310).

The system may determine the first performance metric by executing the first ML pipeline on the input dataset The first performance metric may be a prediction metric such as, an accuracy metric, a confusion matrix, a precision metric, and the like that may be used to evaluate the first ML pipeline. Details related to determination of the first performance metric are further provided, for example, in FIG. 3 (at 312).

The system may determine the second performance metric by executing the second ML pipeline on the input dataset Similar to the first performance metric, the second performance metric may be a prediction metric that may be used to evaluate the second ML pipeline. Details related to the determination of the second performance metric are further provided, for example, in FIG. 3 (at 314).

The system may control the electronic device 102 to render the ML pipeline recommendation as one of the first ML pipeline or the second ML pipeline, based on the comparison of the first performance metric with the second performance metric. Herein, the ML pipeline may be recommended as the first ML pipeline in cases, where the first performance metric is greater than the second performance metric. Similarly, in case the first performance metric is lesser than the second performance metric, then the second ML pipeline may be recommended. Details related to controlling the electronic device 102 are further provided, for example, in FIG. 3 (at 316).

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the electronic device 102 but not the database 108. In addition, in some embodiments, the functionality of the database 108 may be incorporated into the electronic device 102, without a deviation from the scope of the disclosure.

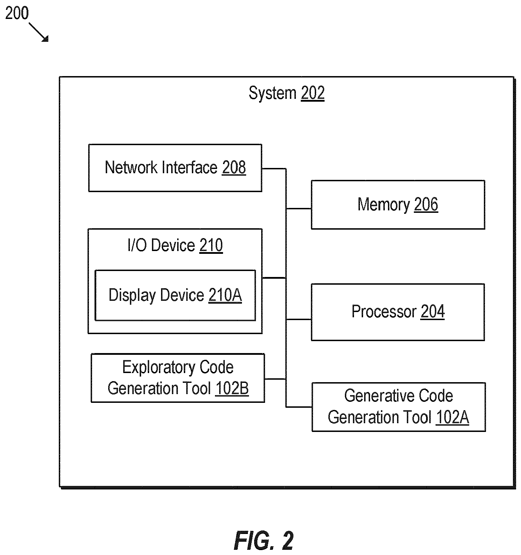

FIG. 2 is a block diagram that illustrates an exemplary system for generating machine learning (ML) pipelines using exploratory and generative code generation tools, arranged in accordance with at least one embodiment described in the present disclosure. FIG. 2 is explained in conjunction with elements from FIG. 1. With reference to FIG. 2, there is shown a block diagram 200 of the electronic device 102. The electronic device 102 may include the generative code generation tool 102A, the exploratory code generation tool 102B, a processor 204, a memory 206, a network interface 208, an input/output (I/O) device 210, and a display device 210A.

The system 202 may include suitable logic, circuitry, interfaces, and/or code that may be configured to generate ML pipelines using exploratory and generative code generation tools, as described herein. Examples of the system 202 may include, but are not limited to, a meta-learning machine, a mobile device, a desktop computer, a laptop, a computer workstation, a computing device, a mainframe machine, a server, such as a cloud server, and a group of servers. In one or more embodiments, the system 202 may include a user-end terminal device and a server communicatively coupled to the user-end terminal device. The system 202 may be implemented using hardware including a processor, a microprocessor (e.g., to perform or control performance of one or more operations), a field-programmable gate array (FPGA), or an application-specific integrated circuit (ASIC). In some other instances, the system may be implemented using a combination of hardware and software.

The processor 204 may include suitable logic, circuitry, and/or interfaces that may be configured to execute program instructions associated with different operations to be executed by the system 202. The processor 204 may include any suitable special-purpose or general-purpose computer, computing entity, or processing device including various computer hardware or software modules and may be configured to execute instructions stored on any applicable computer-readable storage media. For example, the processor 204 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 204 may include any number of processors configured to, individually or collectively, perform or direct performance of any number of operations of the electronic device 102, as described in the present disclosure. Additionally, one or more of the processors may be present on one or more different electronic devices, such as different servers. In some embodiments, the processor 204 may be configured to interpret and/or execute program instructions and/or process data stored in the memory 206. Some of the examples of the processor 204 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 206 may include suitable logic, circuitry, interfaces, and/or code that may be configured to store the input dataset 112. The memory 206 may store program instructions executable by the processor 204. In certain embodiments, the memory 206 may be configured to store operating systems and associated application-specific information. The memory 206 may include computer-readable storage media for carrying or having computer-executable instructions or data structures stored thereon. Such computer-readable storage media may include any available media that may be accessed by a general-purpose or special-purpose computer, such as the processor 204. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 204 to perform a certain operation or group of operations associated with the electronic device 102.

The network interface 208 may comprise suitable logic, circuitry, interfaces, and/or code that may be configured to establish a communication between the electronic device 102 and the server/device of the database 108 via the communication network 110. The network interface 208 may be implemented by use of various known technologies to support wired or wireless communication of the electronic device 102, via the communication network 110. The network interface 208 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The I/O device 210 may include suitable logic, circuitry, interfaces, and/or code that may be configured to receive a user input. For example, the I/O device 210 may receive a first user input corresponding to the input dataset 112. The I/O device 210 may include various input and output devices, which may be configured to communicate with the processor 204 and other components, such as the network interface 208. Examples of the input devices may include, but are not limited to, a touch screen, a keyboard, a mouse, a joystick, and/or a microphone. Examples of the output devices may include, but are not limited to, a display (e.g., the display device 210A) and a speaker.

The display device 210A may comprise suitable logic, circuitry, interfaces, and/or code that may be configured to display the automated pipeline recommendations. The display device 210A may be configured to receive the user inputs (e.g., a first user input corresponding to a request for the input dataset 112) from the user 114. In such cases the display device 210A may be a touch screen to receive the user inputs. The display device 210A may be realized through several known technologies such as, but not limited to, a Liquid Crystal Display (LCD) display, a Light Emitting Diode (LED) display, a plasma display, and/or an Organic LED (OLED) display technology, and/or other display technologies.

Modifications, additions, or omissions may be made to the example electronic device 102 without departing from the scope of the present disclosure. For example, in some embodiments, the example electronic device 102 may include any number of other components that may not be explicitly illustrated or described for the sake of brevity.

FIG. 3 is a diagram that illustrates a flowchart of an example method for generating machine learning (ML) pipelines using exploratory and generative code generation tools, in accordance with an embodiment of the disclosure. FIG. 3 is described in conjunction with elements from FIG. 1 and FIG. 2. With reference to FIG. 3, there is shown a flowchart 300. The method illustrated in the flowchart 300 may start at 302 and may be performed by any suitable system, apparatus, or device, such as, by the example electronic device 102 of FIG. 1, or the processor 204 of FIG. 2. Although illustrated with discrete blocks, the steps and operations associated with one or more of the blocks of the flowchart 300 may be divided into additional blocks, combined into fewer blocks, or eliminated, depending on the particular implementation.

At block 302, the input dataset 112 associated with a ML task may be received. In an embodiment, the processor 204 may be configured to receive the input dataset 112. Examples of the ML task may include, but are not limited to, the classification task, the regression task, the clustering task, the generative task, or the adversarial learning task. In an embodiment, information associated with one or more target features of the input dataset 112 may be further received. Such information may be required to determine the type of the ML task that the user wants to or can perform using the input dataset 112. In an example embodiment, the input dataset 112 may be a tabular dataset associated with a house price prediction problem. The input dataset 112 may include features, such as a lot area, a condition of the house, a year of construction of the house, a pool area, and a selling price of the house. The ML task may be a regression task and the target feature for the ML task may be the selling price.

At block 304, a first ML pipeline associated with the ML task may be generated by executing the generative code generation tool 102A. In an embodiment, the processor 204 may be configured to generate the first ML pipeline associated with the ML task by executing the generative code generation tool 102A. The generative code generation tool 102A may be also referred to as a generative AutoML tool that may quickly create a high-quality ML pipeline for a prediction task on a new dataset by learning from a corpus of old datasets and human-written ML pipelines. For example, the generative code generation tool 102A such as "SapientML" may use a three-stage program synthesis approach that reasons on progressively smaller search areas to reduce the search space. In a first step, a pipeline's feasible ML components may be predicted using an ML model. The components may be condensed into a limited pool of workable concrete pipelines in a second stage utilizing the ML model and syntactic constraints associated with the corpus. In a third stage, a select number of pipelines (from the second stage) may be evaluated for a pipeline recommendation.

The generative code generation tool 102A may not need to explore and dynamically execute a large number of ML pipeline candidates in order to generate the first ML pipeline. Thus, the generative code generation tool 102A may generate the first ML pipeline in a shorter period of time. In scenarios where features associated with the input dataset 112 are unique, human-written pipelines may be unavailable. In such cases, the generative code generation tool 102A may be unable to guarantee a good performance score with the generated ML pipeline.

In an embodiment, the first ML pipeline may include a first plurality of pipeline components to represent a first set of transformations for the input dataset and a first model selection operation for the ML task. The first ML pipeline may include zero or at least one preprocessing component such as a data pre-processing components. In some instances, the first plurality of pipeline components may include a feature selection component and/or a feature engineering component in addition to the data pre-processing component A given preprocessing component may be applied to a subset or an entire set of features of the corresponding input dataset 112 while the ML model may be applied to the entire set of features.

The data pre-processing component may pre-process the input dataset 112 and may include, for example, a missing values handling component, a data imbalance component, and a scaling component applicable on the input dataset 112. Data imbalance for the input dataset 112 may be handled using the data imbalance component, such as, "imblearn.under_sampling", "NearMiss imblearn.over_sampling.SMOTENC", and the like. The input dataset 112 may be scaled using the scaling component, such as, "sklearn.preprocessing.StandardScaler", "sklearn.preprocessing.MinMaxScaler", and the like. The feature selection component may select a subset of features from the set of features associated with the received input dataset 112. Examples of the feature selection component may include, but are not limited to, "pandas. DataFrame.drop" and "sklearn.feature_selection.RFE". The feature engineering component may extract features from the input dataset 112. For example, the feature engineering component may include, "patsy.dmatrices", "sklearn.cluster.KMeans", and the like. The plurality of pipeline components may also include a feature extraction component, such as, "pandas.to_datetime", "sklearn.feature_extraction.text.TfidfVectorizer", and the like. The plurality of pipeline components may further include a category encoder component, such as, "pandas.get_dummies", "sklearn.preprocessing.LabelEncoder", and the like.

The first ML pipeline may also include an ML model component associated with a model selection operation for the ML task. The model selection operation may be used to select a first ML model such as a regression model or a classification model based on the ML task. For example, a model selection and evaluation component may select a first ML model as, "sklearn.model_selection.learning_curve", "sklearn.model_selection.cross_val_predict", and the like. The first ML pipeline may further include a model training operation that may train the selected first ML model.

In an embodiment, the processor 204 may be configured to receive a specification that may include computational resource constraints associated with the system 202 and performance requirements associated with the ML task. The computational resource constraints may include, for example, a number of central processing units (CPUs) that may be available, a number of graphical processing units (GPUs), an available memory for computation or storage, and the like. The performance requirements associated with the ML task may include, for example, a maximum training time, a maximum running time for the execution of the one or more exploratory code generation tools, and the like.

At block 306, a set of pipeline components associated with the ML task may be determined by executing one or more exploratory code generation tools, such as the exploratory code generation tool 102B. In an embodiment, the processor 204 may be configured to determine the set of pipeline components associated with the ML task by executing one or more exploratory code generation tools.

In an embodiment, during the execution of the exploratory code generation tool 102B, the specification may be provided as an input to the exploratory code generation tool 102B. Additionally, or alternatively, a user preference for a type of ML model (e.g., a stacked model) for pipeline components may be provided via the electronic device 102. Upon reception of the specification and/or the user preference, the processor 204 may be configured to determine the set of pipeline components.

As discussed, the set of pipeline components associated with the ML task may be determined by executing one or more exploratory code generation tools such as, the exploratory code generation tool 102B. Each of the one or more exploratory code generation tools may require a different configuration. In some cases, the specification may provide an overall constraint such as, an available computation resource and an execution time. The specification may further provide appropriate configurations such as a number of CPU cores available or a maximum of training time. Based on the specification, constraints associated with execution of the one or more exploratory code generation tools may be determined and enforced during the execution. For example, the number of exploratory code generation tools that may be used to determine the set of pipeline components may depend on the number of graphical processing units (GPUs) that may be available.

In an embodiment, the processor 204 may be configured to determine a maximum running time for the execution of the one or more exploratory code generation tools based on the specification. The processor 204 may be further configured to control the execution of the one or more exploratory code generation tools based on the maximum running time. The one or more exploratory code generation tools may be executed to perform a search over an optimization space of pipeline components and to determine the set of pipeline components based on the search. As discussed, the exploratory code generation tool 102B, for example, the "Mljar-supervised" tool may execute a plurality of ML pipelines available in the search space to determine the set of pipeline components associated with the ML task. The maximum running time may be a maximum time duration for which each of the one or more exploratory code generation tools such as, the exploratory code generation tool 102B may be executed. However, it may be noted that when the computational resources and the execution time are not major constraints, the one or more exploratory code generation tools may be executed for a longer time duration in order to obtain a potentially better set of pipeline components.

Along with the set of pipeline components, the processor 204 may generate performance data associated with such components by using the one or more exploratory code generation tools (such as the exploratory code generation tool 102B). The performance data may include a performance score for each pipeline component of the set of pipeline components.

In an example embodiment, the set of pipeline components may include a set of function calls corresponding to a set of ML models. Additionally, or alternatively, the set of pipeline components may include other components such as a data pre-processing component, a feature selection component, a feature engineering component, or a model training component The set of models may be available as options to replace the model in the first ML pipeline generated by the generative code generation tool 102A. As an example, the set of models may be one of a single layer of an ML model with hyperparameter optimization, a stack of two layers of the ML model, an ensemble of a single layer of two ML models, or an ensemble of two layers of the two ML models. The single layer of an ML model with hyperparameter optimization may be a basic ML model. In an example, the single layer of an ML model may be a bagging model, for example, a "random forest" model. In another example, the single layer of an ML model may be a boosting model, for example, an adaptive boosting ("AdaBoost") model, gradient boosting model, and extreme gradient boosting model ("XGBoost" model). It may be noted that a training dataset may be sampled to a set of samples before applying to the bagging model and/or the boosting model. Both the bagging model and the boosting model may be two main types of ensemble learning methods that may take a collection of weak learners (for example, a decision tree) and form a single strong learner. The main difference between the bagging model and the boosting model may be in a way in which the bagging model and/the boosting model are trained. In the bagging model, weak learners may be trained in parallel, but in boosting model, weak learners may be trained sequentially.

The stack of two layers of the ML model may stack a first layer of the ML model to a second layer of the ML model. The ensemble of the single layer of two ML models may include two models in one layer. The ensemble of two layers of the two ML models may include a first model in a first layer and a second model in a second layer.

Unlike bagging, in ensemble-stacking, the ML models may be different and may fit on the same training dataset instead of samples of the training dataset. Further, unlike boosting, a single ML model in ensemble-stacking may be used to learn to combine predictions from contributing ML models instead of a sequence of ML models that may correct predictions of prior ML models. The architecture of an ensemble-stacking model may involve two or more base ML models, often referred to as "level-0" ML models and a meta-model, referred to as a "level-1" ML model that may combine the predictions of the base ML models. The "level-0" ML models may be models that may fit on the training dataset. Predictions from the "level-0" ML models may be compiled and provided to the "level-1" ML model. The "level-1" ML model may learn to provide a prediction based on how to best combine the predictions of the base models.

Each ML model may be associated with a performance score (i.e., a score included in the performance data). The performance score may measure a prediction metric or a training time of a corresponding ML model of the set of ML models for the input dataset An example of a leaderboard that lists the model selection components and information (such as the performance data) associated with such components is provided in Table 1, as follows:

**Table 1: Exemplary performance data**

| Model Name | Model type | Metric Type | Metric Value | Train Time |
|---|---|---|---|---|
| 2_DecisionTree | Decision Tree | AUC | 0.80314982 | 36.39 |
| 3_DecisionTree | Decision Tree | AUC | 0.80316341 | 36.67 |
| 4_Default_LightGBM | LightGBM | AUC | 8.32E-01 | 52.74 |
| 26_CatBoost | CatBoost | AUC | 0.83949411 | 154.74 |
| 45_CatBoost | CatBoost | AUC | 0.83980168 | 232.19 |
| 46_CatBoost | CatBoost | AUC | 0.83950733 | 104.52 |
| 47_CatBoost_GoldenFeatures | CatBoost | AUC | 0.83941301 | 267.32 |
| 48_CatBoost | CatBoost | AUC | 0.83705034 | 80.05 |
| 45_CatBoost_BoostOnErrors | CatBoost | AUC | 0.83960405 | 209.46 |

From Table 1, it may be observed that the area under the curve (AUC) for each ML model of the set of ML models is determined and the values of the AUC for each ML model of set of set ML models are provided in a corresponding row under "metric value" column. Further, Table 1 provides a training time duration that may be used to train each ML model under a "training time" column. Data provided in Table 1 is merely an example and such an example should not be construed as limiting the present disclosure.

It should be noted that the exploratory code generation tool 102B, for example, "Mljar-supervised^{®}" may approach pipeline recommendation problem for a dataset as a search and optimization problem (i.e., to select the best pipeline from a space of candidates). In some instances, the exploratory code generation tool 102B may rely on specific aspects of pipeline construction, for instance, model construction through neural architecture search for deep learning models, hyper-parameter optimization for neural architectures or traditional ML models, or feature engineering. The exploratory code generation tool 102B may execute a plurality of ML pipelines available in the search space to determine the set of pipeline components associated with the ML task. Thus, for a given input dataset such as the input dataset 112 and for a given sufficient time duration and budget to explore a vast space of ML pipeline, the exploratory code generation tool 102B may be more reliable to find a pipeline with reasonable performance than the generative code generation tool 102A.

At block 308, a pipeline component may be selected from the set of pipeline components. In an embodiment, the processor 204 may be configured to select the pipeline component from the set of pipeline components. By way of example, and not limitation, if the set of pipeline components include the set of function calls corresponding to the set of ML models (as shown in Table 1), then a function call corresponding to an ML model (i.e., a pipeline component) may be selected from the set of pipeline components.

In an embodiment, the processor 204 may be configured to select the pipeline component from the set of pipeline components based on the performance data. The performance data may include the performance score for each pipeline of the set of pipeline components, and the performance score for the selected pipeline component may be a maximum value in the performance data. The performance score may measure a prediction metric or a training time of a corresponding ML model of the set of ML models for the input dataset. The prediction metric may include, for example, an accuracy metric, a confusion matrix, a precision metric, a recall metric, an F-Score, an area under the curve (AUC), a mean absolute error (MAE), a mean squared error (MSE), a R2 Score, an adjusted R2, and the like. As an example, the performance score for the first ML model may be determined in terms of AUC as "0.83945" and in terms of the training time as "150". The performance score of the first ML model may be compared with each ML model of the Table 1 to select the pipeline component With reference to FIG. 1, the pipeline component (that is the ML model) that may be selected from the set of ML models may be "46_CatBoost" having the metric value as "0.83950733" and the training time as "104.52" based on the comparison.

In an embodiment, the processor 204 may be configured to parse content of the first ML pipeline (obtained at 304) to determine a reference to a first ML model via a function call in the content. The first ML pipeline may be parsed using a program parser. Upon parsing the content of the first ML pipeline, the processor 204 may be further configured to select, from the set of function calls, a function call to a second ML model as the pipeline component based a comparison of a performance score for the first ML model with other ML models of the set of ML models. It may be appreciated that the program parser may be a program that may be a part of a compiler and may be used for analysis of a pipeline such as the first ML pipeline. The reference to the first ML model via the function call may be determined using the program parser. For example, the first ML model may be selected as the "CatBoostRegressor (X, Y)".

At block 310, the first ML pipeline may be modified based on the selection to generate the second ML pipeline. In an embodiment, the processor 204 may be configured to modify the first ML pipeline based on the selection to generate the second ML pipeline. The selected pipeline component from the set of pipeline components may be replaced with a pipeline component of the first ML pipeline to generate the second ML pipeline. For example, the model selection component may be selected from the set of pipeline components. A first ML model selection component associated with the first ML pipeline may be replaced with the model selection component to generate the second ML pipeline.

In an embodiment, the modification may include changes associated with a variable name, a model class, and a module path of a pipeline component of the first ML pipeline. It may be noted that "Scikit-Learn" library may be a popular Open-Source Software (OSS) that may support common machine learning algorithms and may expose application programming interfaces (APIs) in a unified interface. For instance, different ML algorithms may have a same name of methods such as "fit()", "predict()", "predict_proba()", and the like. The generative code generation tool 102A such as the "SapientML" tool may adopt "Scikit-Learn" library. The variable name, the model class, and the module path from the first ML pipeline generated using the generative code generation tool 102A, such as the "SapientML" tool may be replaced with the variable name, the model class, and the module path from the selected pipeline component (generated by executing the exploratory code generation tool 102B) based on a pre-defined mapping table.

An example of a mapping from "Mljar-supervised" tool to class of open-source software (OSS) is presented in Table 2, as follows:

**Table 2: Exemplary mapping from "Mljar-supervised" tool to class of OSS**

| Mljar-supervised name | Model Class | Python module path |
|---|---|---|
| Linear | LinearRegression | sklearn.linear_model |
| RandomForest | RandomForestRegressor | sklearn.ensemble |
| ExtraTrees | ExtraTreesRegressor | sklearn.ensemble |
| DecisionTree | DecisionTreeRegressor | sklearn.tree |
| CatBoost | CatBoostRegressor | Catboost |
| LightGBM | LGBMRegressor | Lightgbm |
| Xgboost | XGBRegressor | Xgboost |
| NeuralNetwork | MLPRegressor | sklearn.neural_network |
| NearestNeighbors | KNeighborsRegressor | sklearn.neighbors |
| Linear | LinearRegression | sklearn.linear_model |
| RandomForest | RandomForestRegressor | sklearn.ensemble |
| ExtraTrees | ExtraTreesRegressor | sklearn.ensemble |
| DecisionTree | DecisionTreeRegressor | sklearn.tree |
| CatBoost | CatBoostRegressor | Catboost |
| LightGBM | LGBMRegressor | Lightgbm |
| Xgboost | XGBRegressor | Xgboost |
| NeuralNetwork | MLPRegressor | sklearn.neural_network |
| NearestNeighbors | KNeighborsRegressor | sklearn.neighbors |

Data provided in Table 2 is merely an example and such an example should not be construed as limiting the present disclosure.

In an embodiment, the first ML pipeline may be modified further based on hyperparameters of the selected pipeline component (e.g., a function call to an ML model). The hyperparameters may control a learning of the first ML model associated with the first ML pipeline. Examples of the hyperparameters may include a number of weights, a cost function, an input size, a number of layers, and the like. The hyperparameters of the first ML pipeline may be replaced with the hyperparameters of the selected pipeline in order to modify the first ML pipeline. An example, of hyperparameters of a "CatBoost model" evaluated by "Mljar-supervised" is presented in Table 3, as follows:

**Table 3: Exemplary hyperparameters**

| Name | Learning rate | Depth | RSM |
|---|---|---|---|
| 26_CatBoost | 0.05 | 8 | 0.8 |
| 45_CatBoost | 0.025 | 8 | 0.8 |
| 46_CatBoost | 0.1 | 8 | 0.8 |
| 48_CatBoost | 0.02 | 8 | 0.8 |

Output of the "Mljar-supervised" tool may be analyzed to recover the hyperparameters of the "CatBoost model". From Table 3, it can be observed that the hyperparameters of the "CatBoost model" may include a learning rate and a depth. The hyperparameters of the first ML pipeline may be replaced with the hyperparameters of the selected pipeline in order to modify the first ML pipeline and to generate the second ML pipeline. It should be noted that data provided in Table 3 is merely an example and such an example should not be construed as limiting the present disclosure.

In an embodiment, the second ML pipeline may include a second plurality of pipeline components to represent a second set of transformations for the input dataset, and a second model selection operation for the ML task. The second ML pipeline may zero or at least one preprocessing component such as one or more data pre-processing components and one ML model component associated with the second model selection operation for the ML task. Additionally, the second ML pipeline may include a feature selection component and a feature engineering component. The second plurality of pipeline components may be similar to the first plurality of pipeline components. Therefore, the description of the second plurality of pipeline components is omitted from the disclosure for the sake of brevity.

At block 312, the first performance metric may be determined by executing the first ML pipeline on the input dataset 112. In an embodiment, the processor 204 may be configured to determine the first performance metric by executing the first ML pipeline on the input dataset 112. The performance metric may be a prediction metric that may be used to evaluate a machine learning pipeline to guarantee that the output of the ML pipeline is accurate. Examples of the first performance metric may include, but are not limited to, the accuracy metric, the confusion matrix, the precision metric, the recall metric, the F-Score, the area under the curve (AUC), the mean absolute error (MAE), the mean squared error (MSE), the R2 Score, and the adjusted R2. The accuracy metric may be determined as percentage of a number of accurate predictions made by the first ML model associated with the first ML pipeline to a total number of predictions made by the first ML model associated with the first ML pipeline. The confusion matrix may be a tabular representation of prediction of a binary (or multiclass) classifier. That is, in case, the first ML model associated with the first ML pipeline is a classifier, then the confusion matrix may be used to characterize how well the first ML model may perform on a test dataset when true values for the test dataset may be known. The precision metric may determine a proportion of positive predictions that may be determined as accurate based on execution of the first ML pipeline on the test dataset. The recall metric may determine a proportion of positive predictions that may be determined as inaccurate based on execution of the first ML pipeline on the test dataset. The F1 Score may be calculated as a harmonic mean of the precision metric and the recall metric. The AUC may be a likelihood that the first ML model associated with the first ML pipeline may rank a randomly chosen positive example higher than a randomly chosen negative example. The mean absolute error (MAE) may be a mean of absolute differences between actual values with values predicted by an ML model. The MSE may be a mean of squares of differences between actual values with predicted values. The R2 Score or a R squared error may be a coefficient of determination that may compared the first ML model of the first ML pipeline with a constant baseline to determine. In an embodiment, the AUC may be determined as the first performance metric by executing the first ML pipeline on the input dataset 112.

At block 314, the second performance metric may be determined by executing the second ML pipeline on the input dataset 112. In an embodiment, the processor 204 may be configured to determine the second performance metric by executing the second ML pipeline on the input dataset 112. Examples of the second performance metric may include, but are not limited to, the accuracy metric, the confusion matrix, the precision metric, the recall metric, a F-Score, the area under the curve (AUC), the mean absolute error (MAE), the mean squared error (MSE), the R2 Score, and the adjusted R2. The second performance metric may be similar to the first performance metric. Therefore, the description of the second performance metric is omitted from the disclosure for the sake of brevity. In an embodiment, the AUC may be determined as the second performance metric by executing the second ML pipeline on the input dataset 112.

At block 316, the electronic device 102 may be controlled to render the ML pipeline recommendation as one of the first ML pipeline or the second ML pipeline, based on the comparison of the first performance metric with the second performance metric. In an embodiment, the processor 204 may be configured to control the electronic device 102 to render the ML pipeline recommendation based on the comparison of the first performance metric with the second performance metric.

In case the first performance metric is greater than the second performance metric, then the first ML pipeline may be determined to perform better than the second ML pipeline. In such a case, the first ML pipeline may be recommended. In case the first performance metric is lesser than the second performance metric, then the second ML pipeline may be determined to perform better than the first ML pipeline. In such a case, the second ML pipeline may be recommended. In an example embodiment, the first performance metric and the second performance metric may be accuracy metrics. The first performance metric may be 0.8567 and the second performance metric 0.8921. Upon comparison of both the metrics, the second ML pipeline may be recommended. The recommended ML pipeline may be rendered on a display device such as the display device 210A of FIG. 2. The user 114 may use the recommended ML pipeline for the ML task.

Although the flowchart 300 is illustrated as discrete operations, such as 302, 304, 306, 308, 310, 312, 314, and 316. However, in certain embodiments, such discrete operations may be further divided into additional operations, combined into fewer operations, or eliminated, depending on the particular implementation without detracting from the essence of the disclosed embodiments.

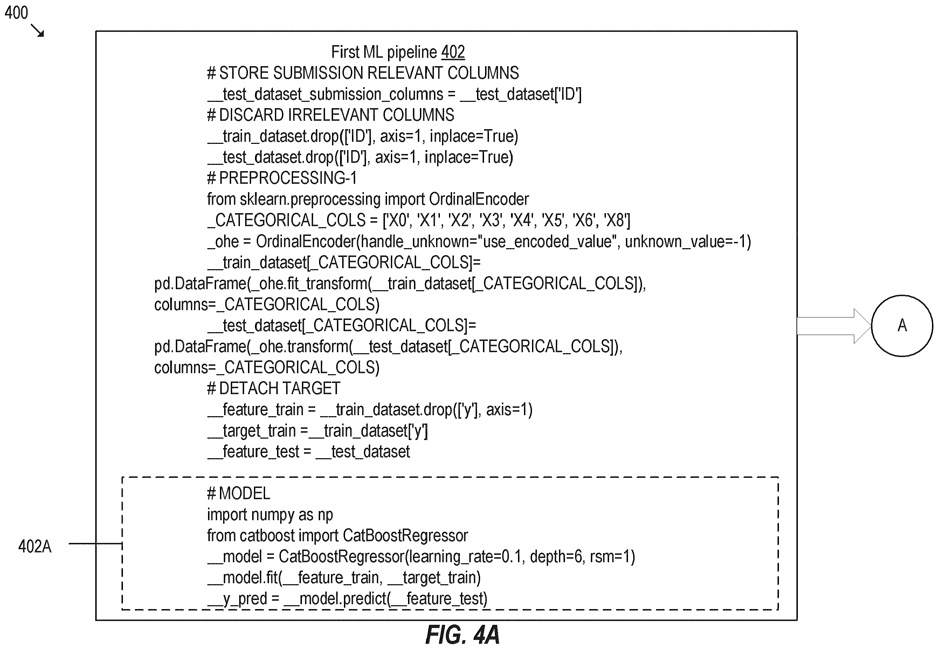

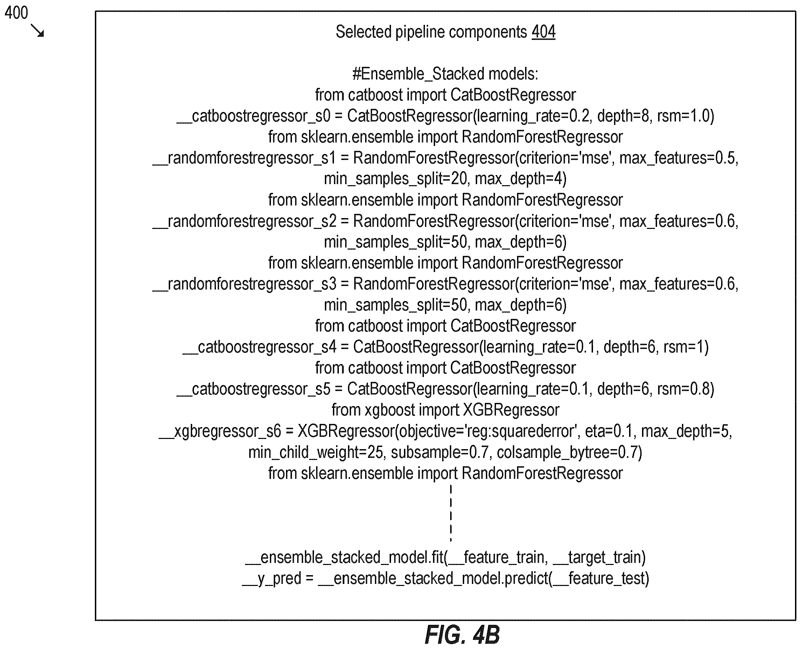

FIGs. 4A and 4B are diagrams that illustrates an exemplary scenario for modifying a first ML pipeline, in accordance with at least one embodiment described in the present disclosure. FIGs. 4A and 4B are described in conjunction with elements from FIG. 1, FIG. 2, and FIG. 3. With reference to FIGs. 4A and 4B, there is shown an exemplary scenario 400. The exemplary scenario 400 may include a generated first ML pipeline 402 and selected pipeline components 404. The generated first ML pipeline 402 may include a set of codes 402A that may be associated with the first ML model.

With reference to FIG. 4A, the generated first ML pipeline 402 may include the set of codes 402A that may be associated with the first ML model. The first ML model may be "CatBoostRegressor" as observed from the set of codes 402A. With reference to FIG. 4B, the first ML pipeline 402 may be modified by replacing the set of codes 402A of the first ML pipeline 402 with the selected pipeline components 404 associated with an ensemble stacked model. As shown, for example, the CatBoostRegressor() model in the first ML pipeline 402 is replaced by an ensemble of CatBoostRegressor() and RandomForestRegressor() from the selected pipeline components 404. It should be noted that the scenario 400 of FIGs. 4A and 4B is an example and such an example should not be construed to limit the scope of the disclosure.

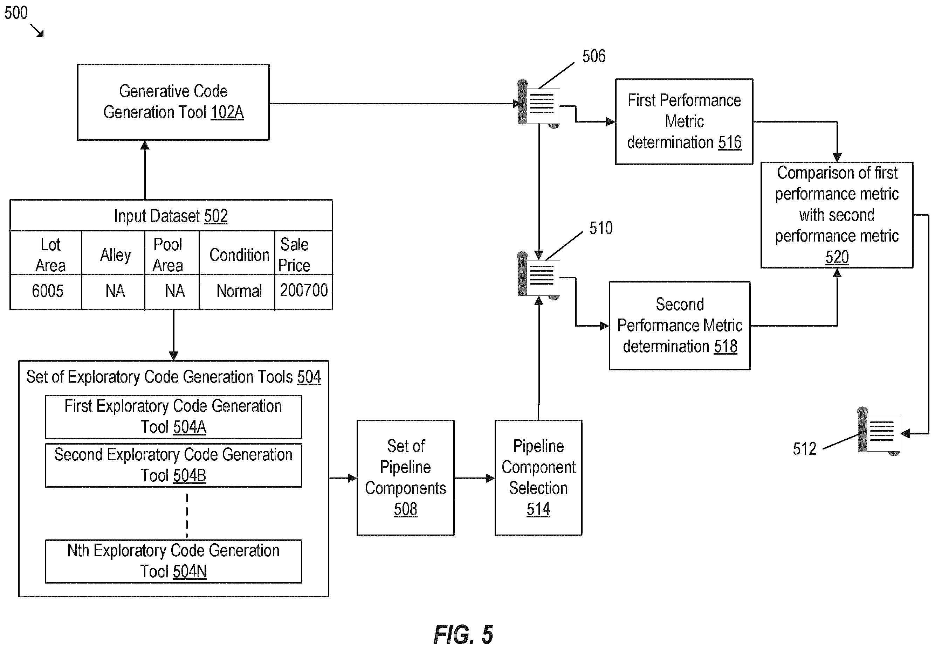

FIG. 5 is a diagram that illustrates an exemplary scenario for generating a machine learning (ML) pipeline using exploratory and generative code generation tools, in accordance with at least one embodiment described in the present disclosure. FIG. 5 is described in conjunction with elements from FIG. 1, FIG. 2, FIG. 3, FIG. 4A, and FIG. 4B. With reference to FIG. 5, there is shown an exemplary scenario 500. The exemplary scenario 500 may include the generative code generation tool 102A, an input dataset 502, a set of exploratory code generation tools 504, a first ML pipeline 506, a set of pipeline components 508, a second ML pipeline 510, and a recommended ML pipeline 512. The set of exploratory code generation tools 504 may include a first exploratory code generation tool 504A, a second exploratory code generation tool 504B, and ... an Nth exploratory code generation tool 504N.

The exemplary scenario 500 may include a set of operations 514, 516, 518, and 520. The set of operations may be performed by the system 202 for generating the ML pipeline using exploratory and generative code generation tools, as described herein.

With reference to FIG. 5, the input dataset 502 may be received. The input dataset 502 may be a tabular dataset related the house price prediction problem. The input dataset 502 may be provided to the generative code generation tool 102A and the set of exploratory code generation tools 504. The generative code generation tool 102A may analyze the input dataset 502 and may generate the first ML pipeline 506 for the ML task of predicting a house price. The set of exploratory code generation tools 504 may determine the set of pipeline components 508 associated with the ML task of predicting the house price.

At block 514, an operation of pipeline component selection may be executed. The processor 204 may be configured to select the pipeline component from the set of pipeline components 508. Details related to the selection of the pipeline component from the set of pipeline components 508 are further provided, for example, in FIG. 3.

The processor 204 may modify the first ML pipeline 506 based on the selection to generate the second ML pipeline 510. Thereafter, at block 516, the processor 204 may determine the first performance metric, such as AUC by executing the first ML pipeline 506 on the input dataset 502.

At block 518, the processor 204 may determine the second performance metric by executing the second ML pipeline 510 on the input dataset 502. Once the first performance metric and the second performance metric are determined, the processor 204 compare the first performance metric with the second performance metric at block 520. Based on the comparison, the recommended ML pipeline 512 may be rendered on a display device, such as the display device 210A of FIG. 2. In case the first performance metric and the second performance metric are the accuracy metric and the metric value of the first performance metric is greater than the metric value of the second performance metric, then the recommended ML pipeline 512 may be the first ML pipeline 506. However, if the metric value of the first performance metric is lesser than the metric value of the second performance metric, then the recommended ML pipeline 512 may be the second ML pipeline 510.

Various embodiments of the disclosure may provide one or more non-transitory computer-readable storage media configured to store instructions that, in response to being executed, cause a system (such as, the example system 202) to perform operations. The operations may include receiving an input dataset (for example, the input dataset 112 of FIG. 1) associated with a machine learning (ML) task. The operations may further include generating a first ML pipeline associated with the ML task by executing a generative code generation tool (for example, the generative code generation tool 102A of FIG. 1). The operations may further include determining a set of pipeline components associated with the ML task by executing one or more exploratory code generation tools (for example, the exploratory code generation tool 102B of FIG. 1). The operations may further include selecting a pipeline component from the set of pipeline components. The operations may further include modifying the first ML pipeline based on the selection to generate a second ML pipeline. The operations may further include determining a first performance metric by executing the first ML pipeline on the input dataset (for example, the input dataset 112 of FIG. 1). The operations may further include determining a second performance metric by executing the second ML pipeline on the input dataset (for example, the input dataset 112 of FIG. 1). The operations may further include controlling an electronic device (for example, the electronic device of FIG. 1) to render an ML pipeline recommendation as one of the first ML pipeline or the second ML pipeline, based on a comparison of the first performance metric with the second performance metric.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the electronic device. In some embodiments, the different components, modules, engines, and services described in the present disclosure may be implemented as objects or processes that execute on the electronic device (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any electronic device as previously defined in the present disclosure, or any module or combination of modulates running on an electronic device.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

Further examples of the present application are as follows:
1. A method, executable by a processor of a system, comprising:
   receiving an input dataset associated with a machine learning (ML) task;
   generating a first ML pipeline associated with the ML task by executing a generative code generation tool;
   determining a set of pipeline components associated with the ML task by executing one or more exploratory code generation tools;
   selecting a pipeline component from the set of pipeline components;
   modifying the first ML pipeline based on the selection to generate a second ML pipeline;
   determining a first performance metric by executing the first ML pipeline on the input dataset;
   determining a second performance metric by executing the second ML pipeline on the input dataset; and
   controlling an electronic device to render an ML pipeline recommendation as one of the first ML pipeline or the second ML pipeline, based on a comparison of the first performance metric with the second performance metric.
2. The method according to example 1, wherein the first ML pipeline includes:
   a first plurality of pipeline components to represent a first set of transformations for the input dataset, and
   a first model selection operation for the ML task.
3. The method according to example 1, wherein the second ML pipeline includes:
   a second plurality of pipeline components to represent a second set of transformations for the input dataset, and
   a second model selection operation for the ML task.
4. The method according to example 1, further comprising:
   receiving a specification that includes computational resource constraints associated with the system and performance requirements associated with the ML task; and
   determining the set of pipeline components based on the specification.
5. The method according to example 4, further comprising:
   determining a maximum running time for the execution of the one or more exploratory code generation tools based on the specification; and
   controlling the execution of the one or more exploratory code generation tools based on the maximum running time,
      wherein the one or more exploratory code generation tools are executed to perform a search over an optimization space of pipeline components and determine the set of pipeline components based on the search.
6. The method according to example 1, further comprising:
   generating, by using the one or more exploratory code generation tools, performance data associated with the set of pipeline components; and
   selecting the pipeline component from the set of pipeline components based on the performance data,
      wherein the performance data includes a performance score for each pipeline component of the set of pipeline components, and
      the performance score for the pipeline component is a maximum value in the performance data.
7. The method according to example 6, wherein the set of pipeline components includes a set of function calls corresponding to a set of ML models.
8. The method according to example 7, wherein the performance score measures a prediction metric or a training time of a corresponding ML model of the set of ML models for the input dataset.
9. The method according to example 7, further comprising:
   parsing content of the first ML pipeline to determine a reference to a first ML model via a function call in the content; and
   selecting, from the set of function calls, a function call to a second ML model as the pipeline component based a comparison of a performance score for the first ML model with other ML models of the set of ML models.
10. The method according to example 7, wherein each ML model of the set of ML models is one of:
   a single layer of an ML model with hyperparameter optimization,
   a stack of two layers of the ML model,
   an ensemble of a single layer of two ML models, or
   an ensemble of two layers of the two ML models.
11. The method according to example 1, wherein the first ML pipeline is modified further based on hyperparameters of the selected pipeline.
12. The method according to example 1, wherein the modification includes changes associated with a variable name, a model class, and a module path of a pipeline component of the first ML pipeline.
13. One or more non-transitory computer-readable storage media configured to store instructions that, in response to being executed, cause a system to perform operations, the operations comprising:
   receiving an input dataset associated with a machine learning (ML) task;
   generating a first ML pipeline associated with the ML task by executing a generative code generation tool;
   determining a set of pipeline components associated with the ML task by executing one or more exploratory code generation tools;
   selecting a pipeline component from the set of pipeline components;
   modifying the first ML pipeline based on the selection to generate a second ML pipeline;
   determining a first performance metric by executing the first ML pipeline on the input dataset;
   determining a second performance metric by executing the second ML pipeline on the input dataset; and
   controlling an electronic device to render an ML pipeline recommendation as one of the first ML pipeline or the second ML pipeline, based on a comparison of the first performance metric with the second performance metric.
14. The one or more non-transitory computer-readable storage media according to example 13, wherein the operations further comprise:
   receiving a specification that includes computational resource constraints associated with the system and performance requirements associated with the ML task; and
   determining the set of pipeline components based on the specification.
15. The one or more non-transitory computer-readable storage media according to example 13, wherein the operations further comprise:
   generating, by using the one or more exploratory code generation tools, performance data associated with the set of pipeline components; and
   selecting the pipeline component from the set of pipeline components based on the performance data,
      wherein the performance data includes a performance score for each pipeline of the set of pipeline components, and
      the performance score for the pipeline component is a maximum value in the performance data.
16. The one or more non-transitory computer-readable storage media according to example 15, wherein the set of pipeline components includes a set of function calls corresponding to a set of ML models.
17. The one or more non-transitory computer-readable storage media according to example 16, wherein the performance score measures a prediction metric or a training time of a corresponding ML model of the set of ML models for the input dataset.
18. The one or more non-transitory computer-readable storage media according to example 16, wherein the operations further comprise:
   parsing content of the first ML pipeline to determine a reference to a first ML model via a function call in the content; and
   selecting, from the set of function calls, a function call to a second ML model as the pipeline component based a comparison of a performance score for the first ML model with other ML models of the set of ML models.
19. The one or more non-transitory computer-readable storage media according to example 13, wherein the first ML pipeline is modified further based on hyperparameters of the selected pipeline.
20. A system, comprising:
   a memory configured to store instructions; and
   a processor coupled to the memory and configured to execute the instructions to perform a process comprising:
      receiving an input dataset associated with a machine learning (ML) task;
      generating a first ML pipeline associated with the ML task by executing a generative code generation tool;
      determining a set of pipeline components associated with the ML task by executing one or more exploratory code generation tools;
      selecting a pipeline component from the set of pipeline components;
      modifying the first ML pipeline based on the selection to generate a second ML pipeline;
      determining a first performance metric by executing the first ML pipeline on the input dataset;
      determining a second performance metric by executing the second ML pipeline on the input dataset; and
      controlling an electronic device to render an ML pipeline recommendation as one of the first ML pipeline or the second ML pipeline, based on a comparison of the first performance metric with the second performance metric.

## Claims

1. A method, executable by a processor of a system, comprising:
receiving an input dataset associated with a machine learning (ML) task;
generating a first ML pipeline associated with the ML task by executing a generative code generation tool;
determining a set of pipeline components associated with the ML task by executing one or more exploratory code generation tools;
selecting a pipeline component from the set of pipeline components;
modifying the first ML pipeline based on the selection to generate a second ML pipeline;
determining a first performance metric by executing the first ML pipeline on the input dataset;
determining a second performance metric by executing the second ML pipeline on the input dataset; and
controlling an electronic device to render an ML pipeline recommendation as one of the first ML pipeline or the second ML pipeline, based on a comparison of the first performance metric with the second performance metric.

2. The method according to claim 1, wherein the first ML pipeline includes:
a first plurality of pipeline components to represent a first set of transformations for the input dataset, and
a first model selection operation for the ML task.

3. The method according to claim 1, wherein the second ML pipeline includes:
a second plurality of pipeline components to represent a second set of transformations for the input dataset, and
a second model selection operation for the ML task.

4. The method according to claim 1, further comprising:
receiving a specification that includes computational resource constraints associated with the system and performance requirements associated with the ML task; and
determining the set of pipeline components based on the specification.

5. The method according to claim 4, further comprising:
determining a maximum running time for the execution of the one or more exploratory code generation tools based on the specification; and
controlling the execution of the one or more exploratory code generation tools based on the maximum running time,
wherein the one or more exploratory code generation tools are executed to perform a search over an optimization space of pipeline components and determine the set of pipeline components based on the search.

6. The method according to claim 1, further comprising:
generating, by using the one or more exploratory code generation tools, performance data associated with the set of pipeline components; and
selecting the pipeline component from the set of pipeline components based on the performance data,
wherein the performance data includes a performance score for each pipeline component of the set of pipeline components, and
the performance score for the pipeline component is a maximum value in the performance data.

7. The method according to claim 6, wherein the set of pipeline components includes a set of function calls corresponding to a set of ML models.

8. The method according to claim 7, wherein the performance score measures a prediction metric or a training time of a corresponding ML model of the set of ML models for the input dataset.

9. The method according to claim 7, further comprising:
parsing content of the first ML pipeline to determine a reference to a first ML model via a function call in the content; and
selecting, from the set of function calls, a function call to a second ML model as the pipeline component based a comparison of a performance score for the first ML model with other ML models of the set of ML models.

10. The method according to claim 7, wherein each ML model of the set of ML models is one of:
a single layer of an ML model with hyperparameter optimization,
a stack of two layers of the ML model,
an ensemble of a single layer of two ML models, or
an ensemble of two layers of the two ML models.

11. The method according to claim 1, wherein the first ML pipeline is modified further based on hyperparameters of the selected pipeline.

12. The method according to claim 1, wherein the modification includes changes associated with a variable name, a model class, and a module path of a pipeline component of the first ML pipeline.

13. One or more non-transitory computer-readable storage media configured to store instructions that, in response to being executed, cause a system to perform operations, the operations comprising:
receiving an input dataset associated with a machine learning (ML) task;
generating a first ML pipeline associated with the ML task by executing a generative code generation tool;
determining a set of pipeline components associated with the ML task by executing one or more exploratory code generation tools;
selecting a pipeline component from the set of pipeline components;
modifying the first ML pipeline based on the selection to generate a second ML pipeline;
determining a first performance metric by executing the first ML pipeline on the input dataset;
determining a second performance metric by executing the second ML pipeline on the input dataset; and
controlling an electronic device to render an ML pipeline recommendation as one of the first ML pipeline or the second ML pipeline, based on a comparison of the first performance metric with the second performance metric.

14. A system, comprising:
a memory configured to store instructions; and
a processor coupled to the memory and configured to execute the instructions to perform a process comprising:
receiving an input dataset associated with a machine learning (ML) task;
generating a first ML pipeline associated with the ML task by executing a generative code generation tool;
determining a set of pipeline components associated with the ML task by executing one or more exploratory code generation tools;
selecting a pipeline component from the set of pipeline components;
modifying the first ML pipeline based on the selection to generate a second ML pipeline;
determining a first performance metric by executing the first ML pipeline on the input dataset;
determining a second performance metric by executing the second ML pipeline on the input dataset; and
controlling an electronic device to render an ML pipeline recommendation as one of the first ML pipeline or the second ML pipeline, based on a comparison of the first performance metric with the second performance metric.
